# EUROPEAN PATENT APPLICATION

(11) **EP 2 704 245 A1**
(43) Date of publication of application: **05.03.2014**
(21) Application number: 12380045.0
(22) Date of filing: 03.09.2012
(51) Int. Cl.: H01M 10/0525, H01M 4/485, H01M 4/505, H01M 4/525, H01M 4/587, H01M 4/36

(54) **Method for preparing carbon coated electrode active material particles**

(71) Applicant: Agencia Estalal Consejo Superior de Investigaciones Cientificas, 28006 Madrid (ES)
(72) Inventor: Palacin, Maria Rosa, 08901 l'Hospitalet de Lobregat Catalonia (ES); Ponrouch, Alexandre, Cerdanyola del Vallès 08290 Barcelona (ES)
(74) Representative: Sueur, Yvette

(57) **Abstract**

The present invention is related to a method for preparing particles having a core made of an electrode active material, and a carbon coating

Said method is based on a physical deposition of carbon, wherein the particles to be coated remain under dry conditions at a temperature lower than their decomposition temperature, during the whole process, hence avoiding all the drawbacks mentioned above and being generally applicable to all electrode active materials. Said method comprises the steps of: providing active material particles; coating said particles with a carbon film by a physical vapor deposition (PVD) method using carbon as the carbon source; wherein the particles remain at a temperature lower than their decomposition temperature.

## Description

The present invention is related to a method for preparing particles having a core made of an electrode active material, and a carbon coating.

### BACKGROUND OF THE INVENTION

Batteries comprise a positive and a negative electrode which are electronically insulated from each other but in contact with an ionic conducting medium, the electrolyte. Except for metal electrodes (such as lithium anodes) electrodes are made of a metal current collector onto which a material is deposited by different means, said material comprising an active material and preferably some additives, such as a binder to ensure mechanical strength and an electronic conducting agent (for instance carbon black). Still, active materials must exhibit high intrinsic electronic and ionic conductivities in order to have acceptable reaction kinetics and hence to be able to operate at the required intensities. The higher the charge /discharge rates at which the battery is expected to operate, the larger electronic and ionic conductivities the electrodes must have.

Battery calendar life upon cycling is enhanced if side reactions, which result in slow degradation of the electrode/electrolyte interfaces, can be avoided. These energetically favored side reactions mostly involve charged electrode materials reacting with nonaqueous electrolytes. [J.B. Goodenough, Y. Kim. Chem. Mater. 22 (2010) 587]

A common practice, especially for low intrinsic conductivity electrode materials, such as LiFePO₄, is to coat the particles surface with a conducting compound which can be a metal, a conducting polymer or, most generally, carbon [J. Wang, X. Sun, Energy & Environmental Science, 5 (2012) 5163]. Following this approach, the poor conductivity is alleviated by creating a conductive carbon coating layer on the active material particles with a minimal amount of adherent carbon (usually less than 2% in weight). [WO 02/27823 A1].

Furthermore, since carbon has a wide electrochemically stable window in organic electrolytes and has good chemical stability, carbon coatings do also prevent surface degradation in electrode materials and hence slow down the capacity fading upon battery cycling [B.L. Cushing, J.B. Goodenough, Solid State Sciences 4 (2002) 1487]. Other advantages of carbon coating include promoting a more uniform SEI (Solid Electrolyte Interphase) layer [C. Natarajan, H. Fujimoto, K. Tokumitsu, A. Mabuchi, T. Kasuh, Carbon 39 (2001) 1409] and buffering of volume changes in active materials and hence circumventing the peeling-off of active material from the current collector due to cracking and pulverization [Y.J. Kwon, J. Cho, Chem. Commun 9 (2008) 1109].

Carbon coating on powdered active materials used for battery electrode fabrication is currently achieved through chemical procedures [H. Li and, H. Zhou. Chem Commun. 48 (2012) 1201]: (i) Chemical/Thermal Vapor deposition using toluene, benzene or an alternative carbon source, (ii) in situ growth of the carbon coating layer during the materials synthesis thanks to the addition of a carbon source to the reacting medium (e.g sucrose, citric acid) or (iii) a post-synthetic treatment involving either spray pyrolysis of a suspension containing the active material and a carbon source or mixing the powdered electrode active material with a carbon precursor using a liquid dispersing medium and performing thermolysis of the mixture in order to decompose the precursor into carbon at high temperatures (ca. 700°C), mostly under inert gas flow. These multi-step routes are of high cost and energy consuming and may be difficult to upscale. The carbon yield (the efficiency of conversion of precursor into carbon) is difficult to estimate *a priori* since it is quite independent of the initial mass ratio between the active particle and carbon precursor [J. Moskon, R. Dominko, R. Cerc-Korosec, M.Gaberscek, J. Jamnik. J. Power Sources 174 (2007) 683].

This procedure can be applied to a large variety of materials either for the positive or negative electrode and aims at best at achieving a uniform particle shell on the particle powders, which remain at the core. However, it is not applicable for electrode active materials which may decompose under the high temperatures needed to decompose the carbon precursor to achieve carbon coating or which may be reduced under the thermal treatment conditions or in materials needing processing under oxidizing conditions which may lead to burn out of added organic precursors. If the electrode active material has a particle size in the nanometric range, the thermal treatment may also induce particle growth and/or agglomeration. Another drawback of such methods is the difficulty of coating materials that can dissolve in the liquid used to prepare the dispersion which will further be thermally treated. Finally, the control of the thickness and uniformity of the carbon layer is also a challenge since it depends on a large amount of parameters: the precursor used, its weight ratio and the homogeneity of the mixture, particle size of the active material etc. While a low amount of carbon precursor may form a thin but hardly a full coating layer on the particle surface, a too thick layer would act as a barrier for ion diffusion.

Alternatively, ball milling with carbon is also a generally used procedure to promote intimate mixture which sometimes results in enhanced electrochemical properties. In these cases no continuous conductive film of carbon is achieved but rather a nanocomposite. This can be considered as a variant of the traditional electrode preparation procedure where the active material is mixed with carbon black and a binder, rather than a technique to produce uniform carbon coating on particles.

Carbon evaporation under vacuum (around 10⁻² Pa) from a pre-shaped carbon rod of a woven thread of carbon fiber is known to produce conductive carbon coatings on samples to enable charge free imaging in electron microscopy and microprobe analysis, with a thickness of ca. 2 nm or more [K. Rüdiger-Peters. J. Microscopy 133 (1984) 17]. The technique was introduced by Bradley in the electron microscopy field and produces cohesive films covering even fissured surfaces [LM. Watt. Cambridge University Press. (1997). ISBN-13: 978-0521435918]. Commercial evaporators are manufactured to that end by various companies but never used to apply a uniform carbon coating on powdered electrode active material.

US-6 733 923 discloses a method for preparing an electrode, said method comprising a step of preparing a composite electrode material containing an oxide, acetylene black as an electronic conducting agent and PVDF as a binder, a step of preparing a film of said composite material and a step of coating said film with carbon through different techniques for instance a heating deposition process. However, in an electrode obtained according to that method, only the surface of the electrode is in contact with the carbon coating and not the surface of the individual particles, which remain uncoated, so the effect is on the surface of the electrode not on the bulk thereof. In contrast, if each particle forming the electrode material is coated, thick (high energy density) electrodes with enhanced electronic conductivity can be manufactured, which will be suitable for battery operation at higher intensities (higher power density).

### THE INVENTION

The present invention intends to provide a method for the production of particles having an active material core and a carbon coating, said particles being used to manufacture an electrode for a battery.

Said method is particularly useful for coating particles of an active material that would be degraded at temperatures needed to decompose carbon precursors to yield carbon coating the particles, either because the intrinsic decomposition temperature of said active material is lower than the temperature required for the pyrolitic decomposition of carbon precursor to yield carbon, or because said active material would be degraded under the conditions existing during the pyrolysis process such as the reducing atmosphere. Furthermore the method is particularly useful for particles of an active material that would dissolve in the solvent used for the traditional coating method involving a step where the carbon precursor is mixed with the active material using a liquid dispersing medium prior to pyrolysis.

The method of the present invention is based on a physical deposition of carbon, wherein the particles to be coated remain under dry conditions at a temperature lower than their decomposition temperature, during the whole process, hence avoiding all the drawbacks mentioned above and being generally applicable to all electrode active materials.

The method of the present invention comprises the steps of:
- providing active material particles;
- coating said particles with a carbon film by a physical vapor deposition (PVD) method using carbon as the carbon source;
wherein the particles remain at a temperature lower than their decomposition temperature.

With respect to methods currently used, mostly based on pyrolysis of carbon precursors, the method of the invention has the following advantages : it avoids heating the active material, it avoids submitting the active material to reducing conditions while hot and it avoids processing the active material in liquid medium. Thus, it is specially suited to thermally unstable materials, materials containing transition metals in high oxidation states which would be reduced during the pyrolysis of carbon precursors or materials reacting with liquids which cannot be coated by chemical means. Moreover, since there is no thermal treatment, particle growth is prevented and control of the amount of carbon (i.e. the thickness of the coating layer) is easy through control of deposition time. Furthermore, as the method is implemented at low temperature, the cost thereof is lower.

Although the method of the invention is particularly useful to prepare carbon coated particles having a core made of an active electrode material that is thermally unstable, it may be carried out to prepare carbon coated particles from all types of active materials generally used for either the cathode or the anode of various batteries, in particular for a lithium battery.

### Detailed description of the preferred embodiments

The method of the invention is particularly useful for the preparation of electrode active materials that have low thermal stability and/or that may react with solvents.

Active cathode materials may be selected from:
● transition metal oxides having spinel or layered type structures such as Li₁₊ₓM₂-ₓO₄ with 0≤x≤0.3 or A₁₊ₓM₁₋ₓO₂, with 0≤x≤0.3; or
● oxides exhibiting a polyanionic framework with formula A_{y}M(XO₄)_{z}Fₜ with 0≤y≤2, 1≤z≤1.5, 0≤t≤1;
● lead sulphate
● Ni₁₋ₓM'ₓ(OH)₂ where M' is transition metal
where M is selected from Mn, Fe, Co, Ni, Cu, V, Ti, Mg, Al, Zn or a mixture of them, X is selected from S, P, or Si and A is either Na or Li.

Examples of active cathode materials that are unstable at temperatures required for coating methods involving pyrolysis of an organic carbon precursor are: nickel oxihydroxides or hydroxides as Ni₁₋ₓMₓ(OH)₂ where M can be any transition metal, and lead sulphate.

Examples of active cathode materials that are unstable because they would degrade within the reducing atmosphere existing during the pyrolysis of an organic carbon precursor are layered A₁₊ₓM₁₋ₓO₂ materials with 0≤x≤0.3 where M is a transition metal in high oxidation state. Examples are Li[Li_{0.2}Mn_{0.5}Ni_{0.15}Co_{0.15}O₂], FePO₄ or any other compound containing Fe³⁺ such as FeSO₄F, and LiCoPO₄.

LiCoPO₄ exhibits the same olivine structure as LiFePO₄ and an operation voltage that is 1.4 V higher than that of LiFePO₄, but its electronic conductivity is much lower than that of LiFePO₄ and thus carbon coating is necessary. However, cobalt compounds being effective catalysts in the carbon gasification processes, the achievement of a coating through a process involving high temperature treatment is much more difficult since the added carbon can be consumed, causing reduction of LiCoPO₄ at the surface of the particles to Co₂P [J. Wolfenstine, J. Read, J.L. Allen. J. Power Sources 163 (2007) 1070].

Active cathode material that would dissolve or react with a solvent are LiFeSO₄F and lithium or sodium transition metal fluorides where transition metal is iron, manganese or vanadium.

A typical example is MFeSO₄F (M=Li, Na or a mixture of both). LiFeSO₄F exhibits interesting performances as positive electrode material for lithium ion batteries with reversible capacities around 140mAh/g at 3.6V vs. Li⁺/Li^{o}. [N. Recham, J.N. Chotard, L. Dupont, C. Delacourt, W. Walker, M. Armand, J.M. Tarascon. Nat. Mater. 9 (2010) 68], [WO2010046610 A1]. However, LiFeSO₄F is not stable at temperature higher than 350°C, which prevents any attempt of performing carbon coating on it by the usual methods involving higher temperatures to promote decomposition of the carbon precursors. Moreover, the compound cannot be processed in aqueous medium since it decomposes to yield FeOOH and LiF.

Active materials useful for an anode are preferably selected from silicon, tin, carbon, graphite, lithium titanium oxide, lithium vanadium oxide, sodium titanium oxide, sodium vanadium oxide, titanium oxide, cobalt oxide, iron oxide, copper oxide, nickel oxide, iron fluoride, lead sulphate or an organic electrode material.

Active anode materials having a low decomposition temperature are lead sulphate and any organic electrode material [Y. Liang, Z. Tao, J. Chen. Advanced Energy Materials 2 (2012) 742] such as organosulfur compounds (RSSR where R can be any organic moiety) or organosulfur polymers containing disulfide or polysulfide bonds; organic free radical compounds, such as nitroxide-based polymers; or carbonyl compounds like sodium terephtalate or lithium rhodizonate.

Active anode materials that are unstable because they would degrade within the reducing atmosphere existing during the pyrolysis of an organic carbon precursor are transition metal oxides such as Fe₂O₃ or Co₃O₄ [B. V. L'vov, Thermochim. Acta, 360 (2000) 109].

Active anode material that would dissolve or react in a solvent are organic electrode materials, sodium titanium oxide, sodium vanadium oxide.

The particle size of the active material is preferably in the range between 5 nm and 700 µm.

The carbon coating on the active material core of the carbon coated particles has preferably a thickness in the range of 1 to 20 nm.

Examples of coating methods involving evaporation of carbon from a source made of carbon are thermal vapor deposition, pulsed laser deposition and magnetron sputtering.

In the preferred embodiment, the physical vapor deposition (PVD) method is a thermal vapor deposition method (TVD). According to said method:
- an element made of carbon and surrounded by a metal filament, typically a tungsten filament, is positioned in a vacuum chamber;
- an active material in powder form is placed on a support in the vacuum chamber;
- the powder is agitated by mechanical means;
- the vacuum chamber is put under a pressure lower than 10⁻¹ Pa (10⁻³ mbar), more preferably lower than 10⁻² Pa (10⁻³ mbar);
- a current is applied to the tungsten filament to heat the carbon and generate carbon vapor in the chamber.

When carbon vapor generated in the reaction chamber is in contact with the surface of the powder particles which are at ambient temperature, carbon is deposited on the surface of the particles.

The deposition rate is regulated by means of the current applied and the thickness of the deposit depends on the deposition time. A higher current applied provides a higher deposition rate. A longer deposition time provides a thicker coating.

The deposition rate is preferably in the range of 0.05 to 0.4 nm/s. Deposition time can be varied allowing a direct control on the coating thickness. A deposition time in the range of 1 minute to 2 hours provides generally an efficient coating thickness.

The amount of active material particles put in the vacuum chamber depends on the size of said vacuum chamber.

The size of the active material particles is preferably in the range of 5 nm to 700 micrometers.

The carbon source is preferably a carbon rod or a woven thread of carbon fiber.

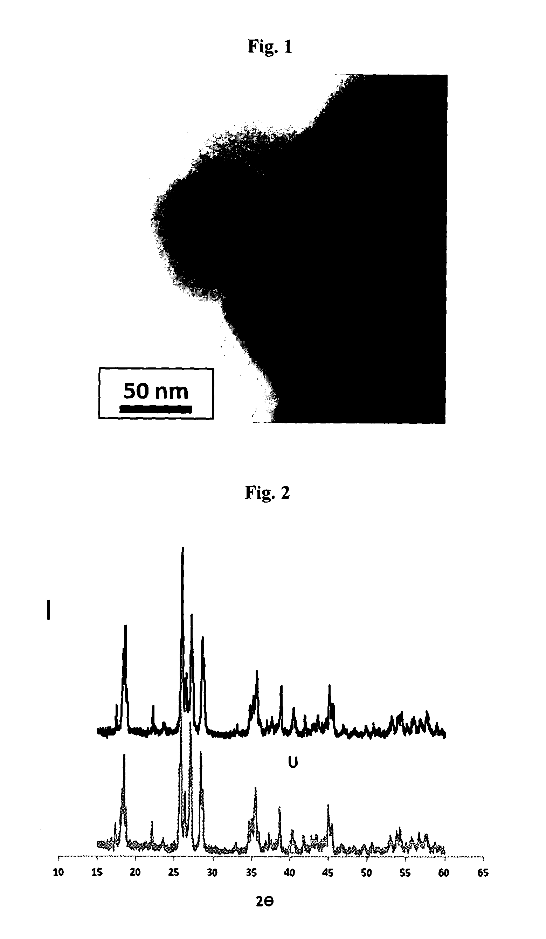

Figure 1 is a high resolution transmission microscopy image of carbon coated LiFeSO₄F particles.
Figure 2 is the X-ray diffraction pattern for the carbon coated LiFeSO₄F (curve C) and uncoated LiFeSO₄F (curve U), respectively.

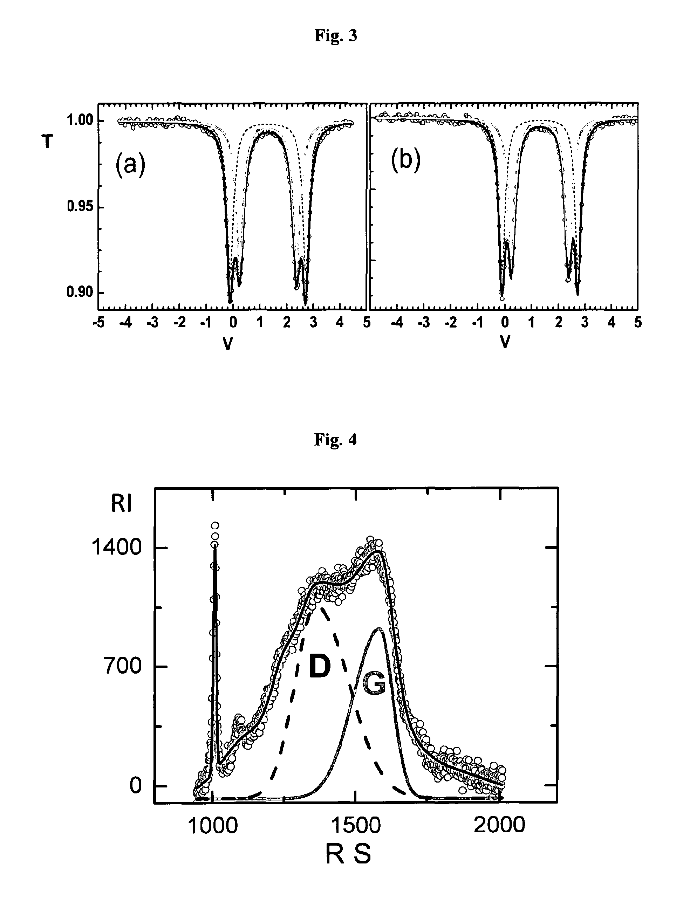

Figures 3a and 3b are Mössbauer spectra for the uncoated LiFeSO₄F and the carbon coated LiFeSO₄F, respectively. T is the transmission and V is the velocity (in mm/s). The curves represented by oooooo and --- correspond to the experimental data and to the calculated data, respectively. The calculated data result from the addition of contributions for the Fe²⁺ (1) and Fe²⁺ (2) crystallographic sites of Fe²⁺ in the LiFeSO₄F tavorite structure represented by-- - - - - and ---- , respectively.
Figure 4 represents the Raman spectrum for carbon coated LiFeSO₄F powder. RI is the Raman Intensity (in counts/s) and RS is the Raman shift (in cm⁻¹). The curves represented by oooooo and ---- correspond to the experimental and data and to the calculated data, respectively. The calculated data result from the contribution of the D and G bands of carbon represented by - - - - - - - - and -----, respectively.

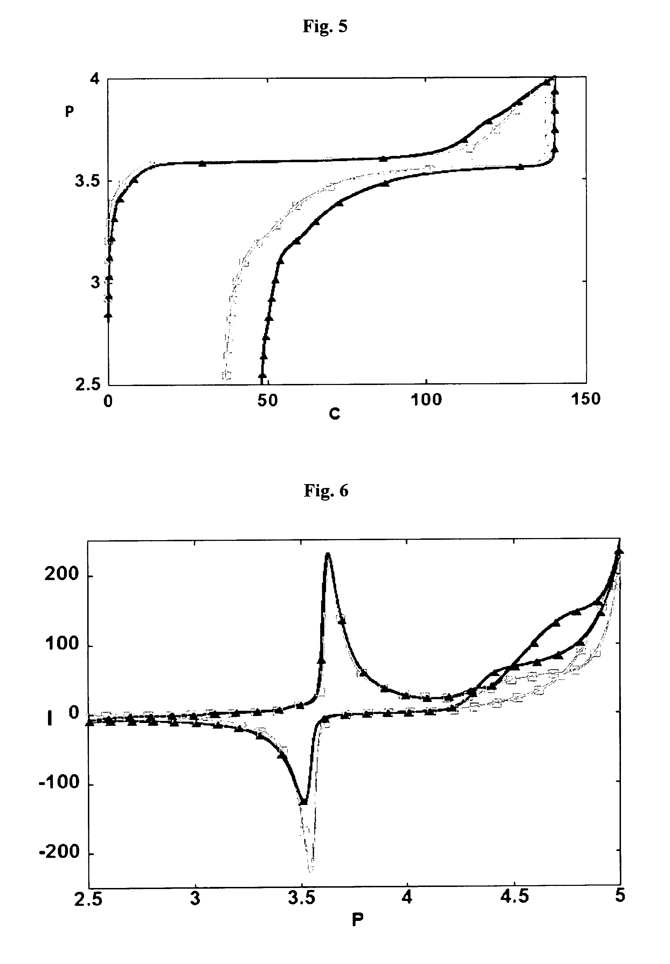

Figure 5 shows first cycle Potential (P, in V vs Li⁺/Li) versus capacity (C, in mAhg⁻¹) profiles for tape electrodes prepared with coated LiFeSO₄F (curve -□-□-□-□-□-□-□-□) and for tape electrodes prepared with uncoated LiFeSO₄F (curve ▲ - ▲ - ▲ - ▲ -), both cycled in 1M LiBOB in EC electrolyte at 100°C with a lithium metal counter electrode in Swagelok type cells.
Figure 6 represents the specific current density I (mAhg⁻¹) versus Potential P (V vs Li⁺/Li) for tape electrodes prepared with carbon coated LiFeSO₄F (curve -□-□-□-□-□-□-□-□) and for tape electrodes prepared with uncoated LiFeSO₄F (curve ▲ - ▲ - ▲ - ▲ -), both cycled in 1M LiBOB in EC electrolyte at 100°C with a lithium metal counter electrode in Swagelok type cells. Sweep rate is 1mVs⁻¹.

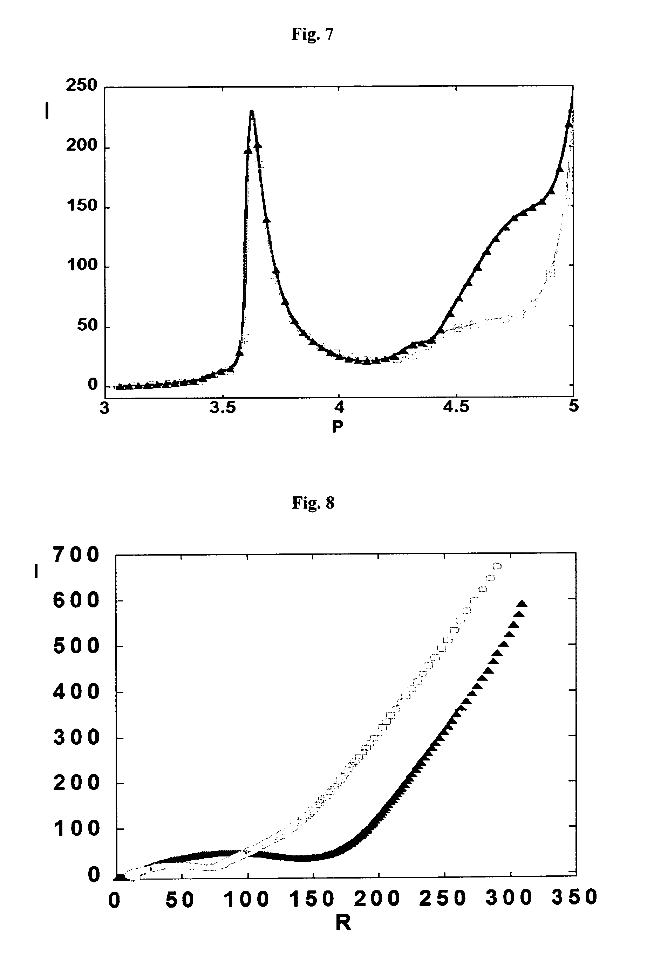

Figure 7 is an expanded view of Figure 6.
Figure 8 represents the Nyquist plots with the imaginary (I) versus the real components (R) of the impedance, plotted for various frequencies (ranging from 500 kHz to 50 mHz) for powder electrodes prepared with carbon coated (□□□□□□□□) and for powder electrodes prepared with uncoated (▲ ▲ ▲ ▲) LiFeSO₄F. Electrochemical impedance spectroscopy measurements were performed in 3 electrode Swagelok cells at room temperature using LP30 electrolyte and lithium metal counter and reference electrodes.

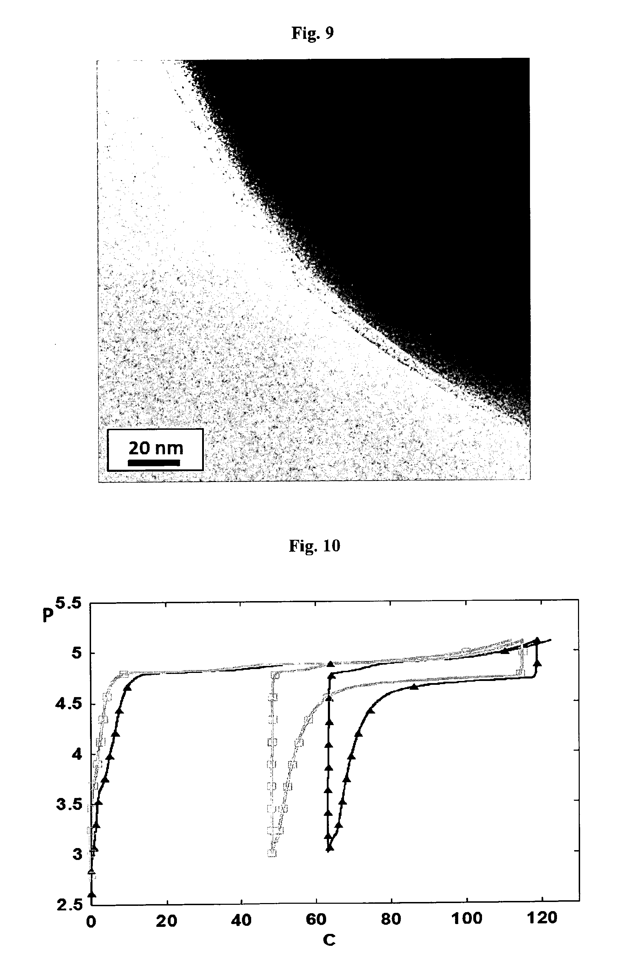

Figure 9 is a high resolution transmission microscopy image of carbon coated LiCoPO₄.
Figure 10 shows first cycle Potential (P, in V vs Li⁺/Li) versus capacity (C, in mAhg⁻¹) profiles for tape electrodes prepared with coated LiCoPO₄ (curve -□-□-□-□-□-□-□-□) and for tape electrodes prepared with uncoated LiCoPO₄ (curve ▲ - ▲ - ▲ - ▲ -), both cycled in LP30 electrolyte at room temperature with a lithium metal counter electrode in Swagelok type cells.

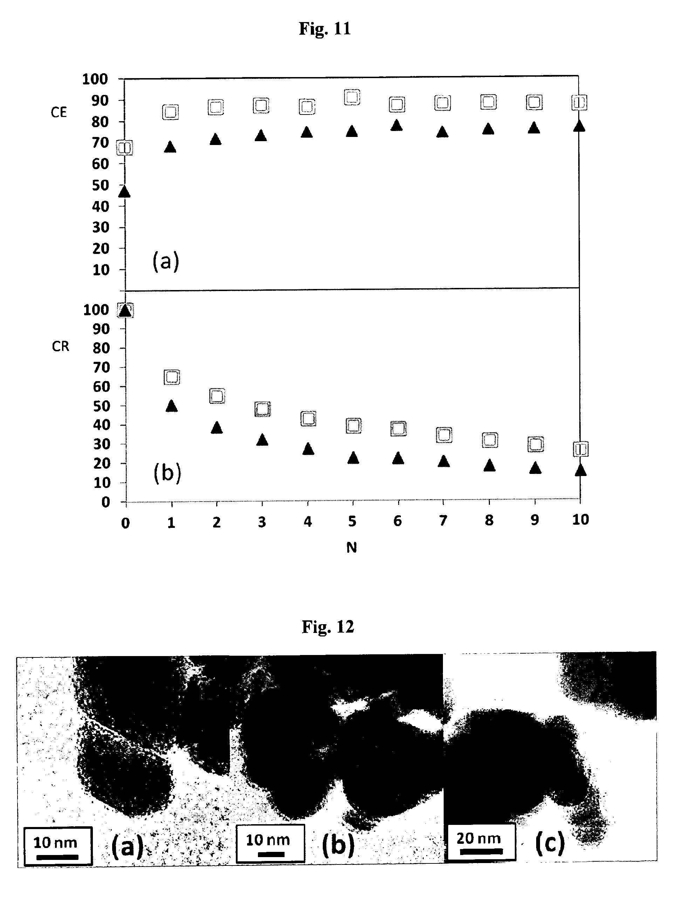

Figure 11 represents a) the Coulombic efficiency CE (in %) and b) the capacity retention CR (%) versus the number of cycles N for tape electrodes prepared with carbon coated LiCoPO₄ (□□□□□□□□) and for tape electrodes prepared with uncoated LiCoPO₄ ( ▲ ▲ ▲ ▲ ) cycled in LP30 electrolyte at room temperature with a lithium metal counter electrode in Swagelok type cells.
Figure 12 shows high resolution transmission microscopy images of carbon coated Co₃O₄ nanoparticles with (a) 5 minutes, (b) 15 minutes and (c) 30 minutes deposition time.

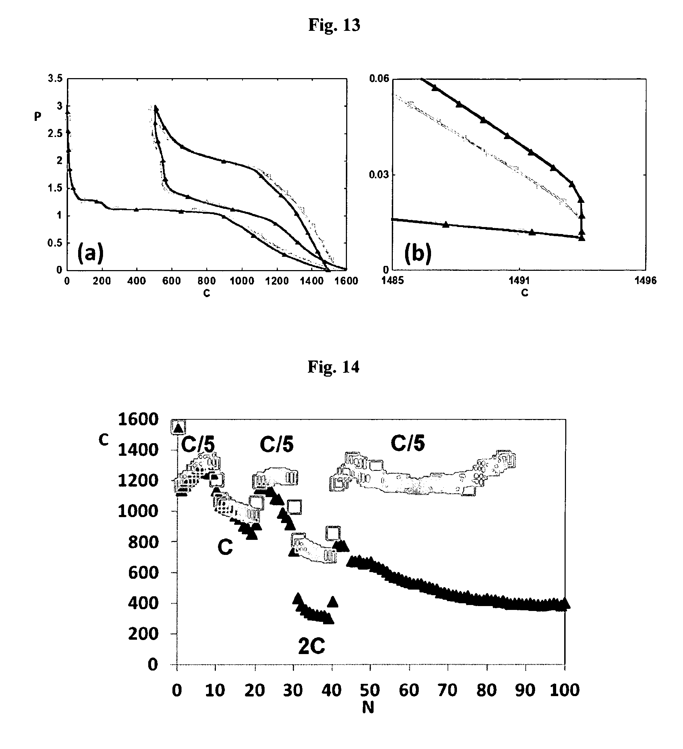

Figure 13a) shows first cycle Potential (P, in V vs Li⁺/Li) versus capacity (C, in mAhg⁻¹) profiles for tape electrodes prepared with coated Co₃O₄ (deposition time is 5 minutes, curve -□-□-□-□-□-□-□-□) and for tape electrodes prepared with uncoated Co₃O₄ (curve ▲ - ▲ - ▲ - ▲ -) cycled in LP30 at room temperature with a lithium metal counter electrode in Swagelok type cells. Fig.13b) displays the normalized voltage versus capacity profiles at the end of the first discharge for same experiments.
Figure 14 represents the capacity (C, in mAhg⁻¹) versus the number of cycles N for tape electrodes prepared with carbon coated Co₃O₄ (□□□□□□□□) with 5 minutes deposition time and for tape electrodes prepared with uncoated Co₃O₄ (▲ ▲ ▲ ▲), both cycled in LP30 at room temperature with a lithium metal counter electrode in Swagelok type cells.

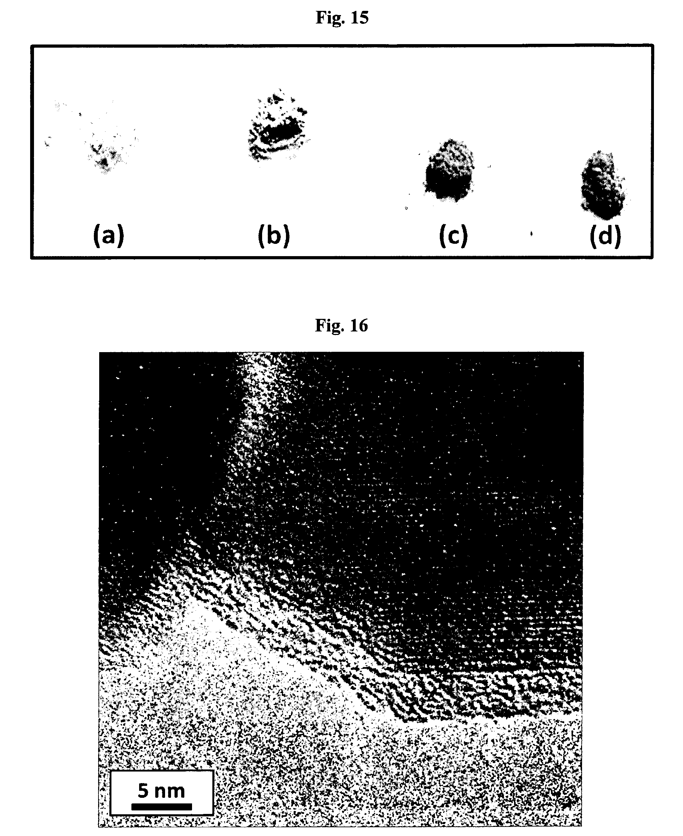

Figure 15 shows a picture of Li₄Ti₅O₁₂ powder (a) uncoated, and of carbon coated Li₄Ti₅O₁₂ powder after a deposition time of 10 minutes (b), 20 minutes (c) and 30 minutes (d).
Figure 16 is a high resolution transmission microscopy image of carbon coated Li₄Ti₅O₁₂.

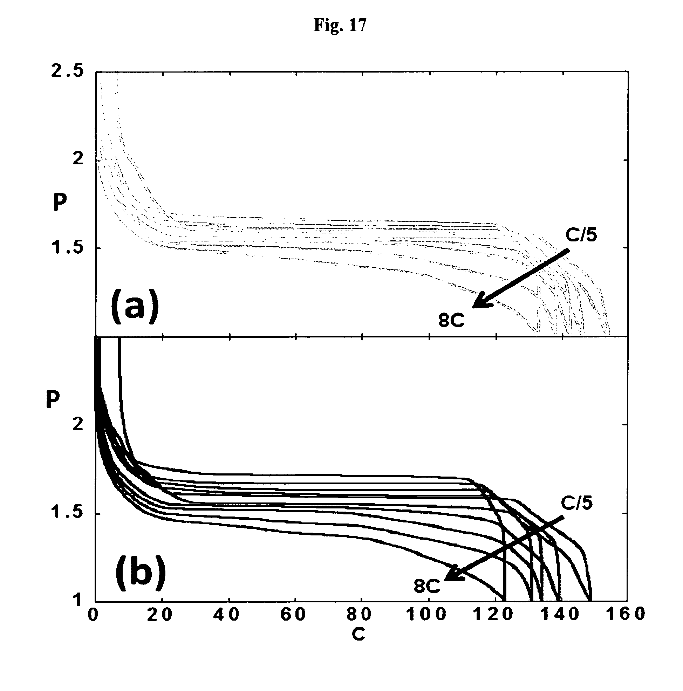

Figure 17 shows the Potential (P, in V vs Li⁺/Li) versus capacity (C, in mAhg⁻¹) profiles for tape electrodes prepared with a) coated Li₄Ti₅O₁₂ and for tape electrodes prepared with b) uncoated Li4Ti₅O₁₂ both cycled in LP30 at room temperature at rates ranging from C/5 to 8C.

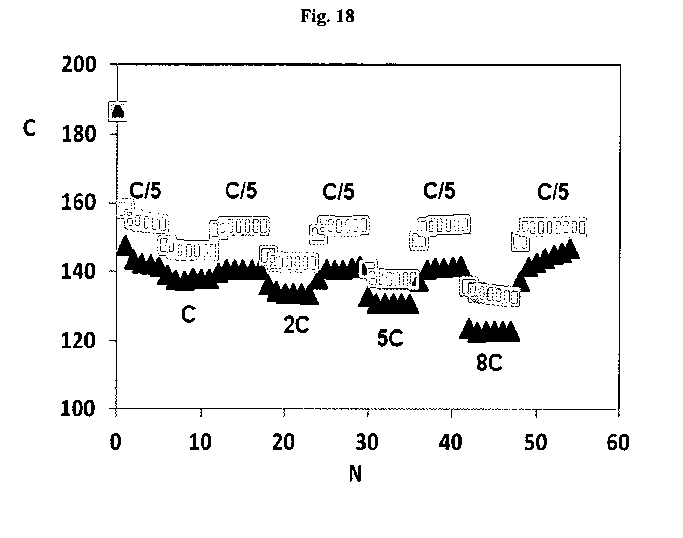

Figure 18 represents the capacity (C, in mAhg⁻¹) versus the number of cycles (N) for tape electrodes prepared with carbon coated Li₄Ti₅O₁₂ (□□□□□) and for tape electrodes prepared with uncoated Li₄Ti₅O₁₂ ( ▲ ▲ ▲ ▲ ), both cycled in LP30 at room temperature with a lithium metal counter electrode in Swagelok type cells.

### EXAMPLES

The products used in the examples are:
- PVDF: polyvinylidene fluoride, provided by Arkema
- Csp: Super P carbon, provided by Timcal
- NMP: N-methylpyrrolidone, provided by Sigma-Aldrich
- A1 foil: a 20 µm thick aluminum foil provided by Goodfellow
- Li foil: a lithium foil provided by Chemetall
- Whattman GF/d: a borosilicate glass fiber provided by Whattman
- LP30: a 1M LiPF₆ in EC:DMC 1:1 electrolyte provided by Merck
- LiBOB: Lithium bis(oxalato)borate by Chemetall
- EC: ethylene carbonate provided by Sigma-Aldrich
- LiCoPO₄: provided by Sigma-Aldrich
- Co₃O₄: provided by Sigma-Aldrich
- Li₄Ti₅O₁₂: provided by Sigma-Aldrich

LiFeSO₄F is prepared as by ionothermal synthesis starting from FeSO₄ H₂O and LiF as described in N. Recham, J.N. Chotard, L. Dupont, C. Delacourt, W. Walker, M. Armand, J.M. Tarascon. Nat. Mat. 9 (2010) 68.

In each example, the coated particles were prepared using a high vacuum coating system provided under the trade name Bal-Tec Med 020, by Leica Microsystems. Said device comprises a clean high-vacuum pump in combination with a removable vacuum chamber and rotary-planetary-tilting sample holder and quartz crystal film thickness monitor system. The deposition rate was measured through a quartz crystal film inside the vacuum chamber and hence was directly read.

### Example 1

### Carbon coated LiFeSO₄F

### Preparation of the carbon coated particles

Carbon coated LiFeSO₄F was prepared using the above mentioned Bal-Tec Med 020 coating system.

An amount of 600 mg of LiFeSO₄F having a particle sizes ranging from 50 to 400 nm was put in the vacuum chamber. The carbon source in the vacuum chamber was a carbon rod, the pressure in the vacuum chamber was about 10⁻² Pa (10⁻⁴ mbar). The deposition time was around 2 hours. The deposition rate was around 0.1 nm/s.

The high resolution transmission microscopy represented on figure 1 shows that the resulting carbon coated particles have a uniform coating of about 20 nm.

### Mössbauer spectroscopy and X-ray diffraction

Mössbauer spectroscopy and X-ray diffraction analysis were performed before and after carbon coating. They indicate that neither the structure nor the oxidation state of iron in the compound are modified by the carbon coating process. The iron XRD pattern (represented on figure 2) does not change and the Mössbauer spectra (represented on figure 3) are identical. The Mössbauer spectra were fitted with two doublets in accordance with the two crystallographic sites of Fe²⁺ in the tavorite LiFeSO₄F structure and the Mössbauer parameters are identical to those already reported for that phase. No trace of Fe³⁺ is detected.

The Raman spectrum (represented on figure 4) for carbon coated LiFeSO₄F powder exhibits two broad bands at 1350 and 1580 cm⁻¹ (D and G bands of carbon). The ratio between them allows evaluating the degree of disorder in the carbon as previously reported for carbon coated LiFePO₄. [M. M. Doeff, Y. Hu, F. Mc Lamon, R. Kostecki, Electrochem. Solid-State Lett. 6 (2003) A207], for which a D/G ratio of ca. 2 or lower has been found to be optimum. In this case, a D/G bands ratio of ca. 1.5 was calculated from figure 4, indicating a high degree of graphitization of the carbon coated layer and thus high electronic conductivity.

### Preparation of "tape" electrodes

Slurries were prepared by mixing 80wt.% of the active material with or without carbon coating, 5wt.% of PVDF as a binder and 15wt.% of Csp as carbon additive in NMP. Mixing of the slurries was performed by magnetic stirring during 3 h, the vial containing the slurry being placed in an ultrasonic bath for 10 minutes every 1 h.

Composite electrodes were prepared by depositing the slurry on a 20 µm thick aluminum foil with a 250 µm Doctor-Blade and further dried at 120 °C under vacuum. Once dried, 0.8 cm² disk electrodes were cut and pressed at 7.8 · 10⁸ Pa.

### Electrochemical testing

"Tape" electrodes were tested in Swagelok type cells [D. Guyomard, J.M. Tarascon. J. Electrochem. Soc. 139 (1992) 937] with a disk of Li metal foil as counter electrode. Two sheets of Whattman GF/d borosilicate glass fiber were used as a separator, soaked with the electrolyte (ca. 0.5 cm³ of 1M LiBOB in ethylene carbonate (EC). Electrochemical experiments were made at 100°C to promote electrolyte decomposition and better evaluate the impact of carbon coating reactivity of the active material with the electrolyte. These experiments were done in galvanostatic mode with potential limitation (GCPL) at a C/20 rate, meaning one mol of Li⁺ per mol of LiFeSO₄F inserted in 20 hours. Almost full theoretical capacity (i.e. 151 mAhg⁻¹) is obtained in both cases for first oxidation (see figure 5). Better coulombic efficiency (difference of capacity recorded between the discharge and charge) is achieved in the case of carbon coated LiFeSO₄F with ca. 73.5% compared to 65.7% for uncoated LiFeSO₄F.

Cyclic voltamperommetry at 1 mVs⁻¹ was also performed. Significant oxidation current is measured above 4 V vs Li⁺/Li in both cases due to the electrolyte decomposition at the interface with the active material (cf. figure 6). The current intensity for such decomposition is decreased for carbon coated LiFeSO₄F and the onset potential significantly shifted to higher values, being observed at 4.31V for carbon coated LiFeSO₄F and at 4.18V for uncoated LiFeSO₄F (cf. figure 7). These results confirms the full coverage of LiFeSO₄F particles by carbon coating.

### Preparation of powder type electrodes and electrochemical impedance

Powder type electrodes were prepared by simple mixing the carbon coated LiFeSO₄F with Csp in a weight ratio of 80/20, in an agate mortar for 15 min.

Said electrodes (typical loading ca. 7 ± 1 mg) were used for electrochemical impedance tests at room temperature in three electrode Swagelok type cells with a disk of Li metal foil as counter and reference electrodes. Two sheets of Whattman GF/d borosilicate glass fiber were used as a separator, soaked with the electrolyte (ca. 0.5 cm³ of LP30). The charge transfer resistance in the carbon coated sample appeared to be significantly reduced, demonstrating the improved electronic conductivity of the carbon coated particles compared with the uncoated particles (cf. figure 8).

### Example 2

### Carbon coated LiCoPO₄

### Preparation of carbon coated particles

Carbon coated LiCoPO₄ were prepared according to the method described in example 1, using 600 mg of LiCoPO₄ having a particle sizes ranging from 100 nm to 1 µm, and a deposition time of around 30 minutes

The resulting carbon coated particles have a uniform coating of about 5 nm, as shown on figure 9. A gradual change in coloration was observed upon carbon deposition from purple for the uncoated powder to grey for the coated sample.

### Preparation of "tape" electrodes

Tape electrode were prepared using the coated and the uncoated LiCoPO₄ particles according to method described in Example 1.

### Electrochemical testing

"Tape" electrodes were tested in Swagelok type cells with a disk of Li metal foil as counter electrode. Two sheets of Whattman GF/d borosilicate glass fiber were used as a separator, soaked with the electrolyte (ca. 0.5 cm³ LP30) at room temperature. These experiments were done in galvanostatic mode with potential limitation (GCPL) at a C/20 rate, meaning one mol of Li⁺ per mol of LiCoPO₄ inserted in 20 hours.

High capacity is observed upon first oxidation (ca. about 120 mAhg⁻¹) for both coated and uncoated LiCoPO₄ (cf figure 10). Higher coulombic efficiency (58.2%) is achieved for carbon coated LiCoPO₄ when compared to uncoated LiCoPO₄ (46.8%). Better capacity retention upon cycling is also observed for the former (cf. figure 11).

### Example 3

### Carbon coated Co₃O₄

### Preparation of carbon coated particles

Carbon coated Co₃O₄ were prepared according to the method described in example 1, using 600 mg of Co₃O₄ having a particle sizes ranging from 30 to 40 nm.

Transmission electron microscopy images taken on samples after 5, 15 and 30 min deposition time are given in figure 12. They show the evolution of the deposit thickness, which correspond respectively to 1, 2 and 4 nm.

### Preparation of "tape" electrodes

Slurries were prepared by mixing 65wt.% of the active material with or without carbon coating, 8wt.% of PVDF as a binder and 27wt.% of Csp as carbon additive in NMP. Mixing of the slurries was performed by magnetic stirring during 3 h, the vial containing the slurry being placed in an ultrasonic bath for 10 minutes every 1 h.

Composite electrodes were prepared by depositing the slurry on a 20 µm thick copper foil with a 250 µm Doctor-Blade and further dried at 120 °C under vacuum. Once dried, 0.8 cm² disk electrodes were cut and pressed at 7.8 10⁸ Pa.

### Electrochemical testing

"Tape" electrodes were tested in Swagelok type cells with a disk of Li metal foil as counter electrode. Two sheets of Whattman GF/d borosilicate glass fiber were used as a separator, soaked with the electrolyte (ca. 0.5 cm³ LP30) at room temperature. These experiments were done in galvanostatic mode with potential limitation (GCPL) with a succession of 10 cycles at different C rates. First, 10 cycles were performed at C/5 followed by 10 cycles at C, C/5, 2C and finally C/5. Results are shown on figures 13 and 14.

The first cycle for both carbon coated and uncoated Co₃O₄ are very similar in terms of capacity, coulombic efficiencies and voltage hysteresis (cf. figure 13a). However, the electrode prepared with carbon coated Co₃O₄ exhibits lower overpotential between discharge and charge at the end of the first reduction (cf. figure 13b). This is in agreement with the conductivity of carbon coated particles higher than the conductivity of the uncoated particles. A much better capacity retention is observed for carbon coated Co₃O₄ with a stable capacity of about ca. 1200 mAhg⁻¹ achieved at C/5 after 90 cycles (cf. figure 14). Very good capacity retention is also observed at higher rates for carbon coated Co₃O₄ with capacities higher than 700 mAhg⁻¹ at 2C, compared to only 300 mAhg⁻¹ for uncoated Co₃O₄. Since the non-uniform growth of a gel like film upon cycling, limits the diffusion of Li⁺ within the electrode and induces capacity fade in electrodes prepared using Co₃O₄ nanoparticles as active materials [A. Ponrouch and M.R. Palacin, J. Power Sources, 212 (2012) 233], it is straightforward to conclude that carbon coating on Co₃O₄ nanoparticles allows the growth of more uniform gel like film and therefore a better diffusion of Li⁺ through the bulk of the electrode.

### Example 4

### Carbon coated Li₄Ti₅O₁₂

Carbon coated Li₄Ti₅O₁₂ was prepared according to the method of example 1. An amount of 600 mg of Li₄Ti₅O₁₂ having a particle sizes ranging from 10 to 100 nm was put in the vacuum chamber. The carbon source in the vacuum chamber was a carbon rod, the pressure in the vacuum chamber was about 10⁻² Pa (10⁻⁴ mbar). The deposition rate was around 0.1 nm/s.

A gradual change in coloration was observed upon carbon deposition from white for the uncoated powder to grey for the coated sample. Figure 15 shows the change of color from uncoated Li₄Ti₅O₁₂ powder (a), and of carbon coated Li₄Ti₅O₁₂ powder after a deposition time of 10 minutes (b), 20 minutes (c) and 30 minutes (d). After 30 minutes deposition time, the resulting carbon coated particles have a uniform coating of about 4 nm, as shown on figure 16.

### Preparation of "tape" electrodes

Slurries were prepared by mixing 65wt.% of the active material with or without carbon coating, 8wt.% of PVDF as a binder and 27wt.% of Csp as carbon additive in NMP. Each slurry was mixed by magnetic stirring during 3 h, the vial containing the slurry being placed in an ultrasonic bath for 10 minutes every 1 h.

Composite electrodes were prepared by depositing the slurry on a 20 µm thick copper foil with a 250 µm Doctor-Blade and further dried at 120 °C under vacuum. Once dried, 0.8 cm² disk electrodes were cut and pressed at 7.8 · 10⁸ Pa.

### Electrochemical testing

"Tape" electrodes were tested in Swagelok type cells with a disk of Li metal foil as counter electrode. Two sheets of Whattman GF/d borosilicate glass fiber were used as a separator, soaked with the electrolyte (ca. 0.5 cm³ LP30) at room temperature. These experiments were done in galvanostatic mode with potential limitation (GCPL) with a succession of 6 cycles at different C rates. First, 6 cycles were performed at C/5 followed by 10 cycles at C, C/5, 2C, C/5, 5C, C/5, 8C and finally C/5. Results are shown on figure 17 and 18.

The first cycle for both electrodes appeared to be very similar in terms of capacity, coulombic efficiencies and voltage hysteresis (cf. figure 17) for coated and uncoated Li₄Ti₅O₁₂. The voltage hysteresis between charge and discharge at high C rates is much lower for carbon coated Li₄Ti₅O₁₂ in agreement with higher electronic conductivity. Upon cycling a much better capacity retention is observed for carbon coated Li₄Ti₅O₁₂ with a stable capacity of about ca. 155 mAhg⁻¹ achieved at C/5 compared to only 140 mAhg⁻¹ for uncoated Li₄Ti₅O₁₂. Very good capacity retention at high C rates is also achieved for carbon coated Li₄Ti₅O₁₂ with capacities higher than 135 mAhg⁻¹ obtained at 8C compared to 120 mAhg⁻¹ for uncoated Li₄Ti₅O₁₂.

## Claims

1. A method for preparing particles having a core made of an electrode active material and a carbon coating, **characterized in that** said method comprises the steps of:
- providing active material particles;
- coating said particles with a carbon film by a physical vapor deposition (PVD) method using carbon as the carbon source;
wherein the particles remain are at a temperature lower than their decomposition temperature.

2. The method according to claim 1, wherein the physical vapor deposition method is thermal vapor deposition, pulsed laser deposition and magnetron sputtering.

3. The method of claim 2, wherein
- an element made of carbon and surrounded by a metal filament is positioned in a vacuum chamber;
- an active material in powder form is placed on a support in the vacuum chamber;
- the powder is agitated by mechanical means;
- the vacuum chamber is put under a pressure lower than 10⁻¹ Pa (10⁻³ mbar), more preferably lower than 10⁻² Pa (10⁻³ mbar);
- a current is applied to the tungsten filament to heat the carbon to generate carbon vapor in the chamber.

4. The method of claim 3, wherein the deposition rate is controlled by means of the current applied, a higher current applied providing a higher deposition rate.

5. The method of claim 3, wherein thickness of the deposit is controlled by the deposition time, a longer deposition time providing a thicker coating.

6. The method of claim 4, wherein the deposition rate is in the range of 0.05 to 0.4 nm/s.

7. The method of claim 5, wherein the deposition time in the range of 1 minute to 2 hours.

8. The method of claim 1, wherein the size of the active material particles to be coated is in the range of 5 nm to 700 µm.

9. The method of claim 5, wherein the element made of carbon is a carbon rod or a woven thread of carbon fiber.

10. The method of claim 1, **characterized in that** the electrode active material is a cathode active material selected from:
- transition metal oxides having spinel or layered type structures such as Li₁₊ₓM₂₋ₓO₄ with 0≤x≤0.3 or A₁₊₁M₁₋ₓO₂, with 0≤x≤0.3; or
- oxides exhibiting a polyanionic framework with formula A_{y}M(XO₄)_{z}Fₜ with 0≤y≤2, 1≤z≤1.5, 0≤t≤1;
- Ni₁₋ₓM'ₓ(OH)₂ where M' is transition metal; and
- lead sulphate;
where M is selected from Mn, Fe, Co, Ni, Cu, V, Ti, Mg, Al, Zn or a mixture of them, X is selected from S, P, or Si and A is either Na or Li.

11. The method of claim 1, **characterized in that** the electrode active material is an anode material selected from silicon, tin, carbon, graphite, lithium titanium oxide, lithium vanadium oxide, sodium titanium oxide, sodium vanadium oxide, titanium oxide, cobalt oxide, iron oxide, copper oxide, nickel oxide, iron fluoride, lead sulphate or an organic electrode material.
